# EUROPÄISCHE PATENTSCHRIFT

(11) **EP 2 714 948 B1**
(45) Veröffentlichungstag und Bekanntmachung des Hinweises auf die Patenterteilung: **12.07.2017**
(21) Anmeldenummer: 12756646.1
(22) Anmeldetag: 16.05.2012
(51) Int. Cl.: C21D 9/00, F27D 5/00, C21D 1/10, F27D 11/06

(54) **VORRICHTUNG ZUM HALTEN EINES WERKSTÜCKS WÄHREND EINER INDUKTIVEN ERWÄRMUNG**
DEVICE FOR RETAINING A WORKPIECE DURING INDUCTIVE HEATING
DISPOSITIF DE MAINTIEN D'UNE PIÈCE LORS D'UNE OPÉRATION DE CHAUFFAGE PAR INDUCTION

(30) Priorität: 03.06.2011 DE 102011104315; 24.06.2011 DE 102011105752
(43) Veröffentlichungstag der Anmeldung: 09.04.2014
(73) Patentinhaber: ITG Induktionsanlagen GmbH, 69434 Hirschhorn (DE)
(72) Erfinder: FALTER, Armin, 69483 Wald-Michelbach (DE); KABEL, Hans-Peter, 64757 Rothenberg (DE); KEISSNER, Matthias, 69412 Eberbach (DE)
(74) Vertreter: Patent- und Rechtsanwälte Ullrich & Naumann
(86) Internationale Anmeldenummer: PCT/DE2012/200036
(87) Internationale Veröffentlichungsnummer: WO 2012/163352

(56) Entgegenhaltungen:
- DE-C3- 2 057 005
- JP-A- 63 083 222
- R. S. Lampman ET AL: "Heat treating ASM Handbook", 1991, ASM International, USA, XP055045756, ISBN: 978-0-87-170379-8 Bd. 4, Seite 183, Seite 183, Spalte 2, Absatz 5 - Spalte 3, Absatz 2

## Beschreibung

Die Erfindung betrifft eine Vorrichtung zum Halten eines Werkstücks während einer induktiven Erwärmung, insbesondere während der Oberflächenhärtung von Nocken der Nockenwelle eines Verbrennungsmotors, mit einem Grundkörper und einem sich an den Grundkörper anschließenden Aufnahmebereich, wobei das Werkstück formschlüssig und/oder kraftschlüssig im/am Aufnahmebereich gehalten wird, wobei zumindest der Aufnahmebereich aus einem Material gefertigt ist, das eine geringe oder keine elektrische Leitfähigkeit aufweist.

Bei den in Rede stehenden Werkstücken kann es sich beispielsweise um Nocken der Nockenwelle eines Verbrennungsmotors handeln. Als Nockenwelle werden heutzutage Rohre verwendet, die lediglich an den die Nocken tragenden Stellen punktuell gehärtet werden. Die Nocken werden einzeln auf die Nockenwelle aufgezogen, aufgepresst, aufgeklebt etc.. Vor dem Befestigen an der Nockenwelle müssen die Nocken gehärtet werden. Ein gängiges und seit Jahren in der Praxis verwendetes Verfahren zum Härten von Werkstücken ist das sog. Induktionshärten. Ziel des Induktionshärtens ist es, ein beliebig geformtes Werkstück auf die erforderliche Härtetemperatur zu erhitzen. Das Werkstück wird dazu dem Einfluss eines elektromagnetischen Wechselfelds ausgesetzt, wodurch in dem Werkstück Wirbelströme induziert werden. Durch diese Wirbelströme erhitzt sich das Werkstück. Das erhitzte Werkstück wird beispielsweise in einem Wasserbad abgeschreckt, wodurch sich die mechanische Widerstandsfähigkeit des Werkstücks erhöht. Das durch die Induktionserhitzung erzeugte Härtebild des Werkstücks ist von der Temperatur abhängig, auf die das Werkstück erhitzt wird. Zur Erzeugung eines gleichmäßigen Härtebildes muss das Werkstück gleichmäßig stark erhitzt werden.

Vorrichtungen zum Halten eines Werkstücks während einer induktiven Erwärmung sind seit Jahren aus der Praxis bekannt. Hierbei handelt es sich um aus Metall gefertigte Halter, mit einem Grundkörper und einem sich an den Grundkörper anschließenden Aufnahmebereich. Das Werkstück wird maschinell oder von Hand auf den Aufnahmebereich aufgelegt, wo es formschlüssig und/oder kraftschlüssig gehalten wird.

Aus JP 63083222 A ist eine Vorrichtung zum Halten eines Werkstücks während einer induktiven Erwärmung vorbekannt. Die Vorrichtung umfasst einen Aufnahmebereich aus einer Silicidkeramik, in dem ein Stirnrad während einer induktiven Erwärmung formschlüssig gehalten wird.

Die DE 20 57 005 C3 zeigt eine Einrichtung zum Induktionshärten von im wesentlichen zylindrischen Werkstücken länglicher Form. Das Werkstück wird dabei durch Klemmfinger eines Spanngehäuses gehalten.

Bei den aus der Praxis bekannten Vorrichtungen ist jedoch problematisch, dass nicht nur im Werkstück sondern auch im Halter selbst Wirbelströme induziert werden. Dies führt je nach äußerer Form des Werkstücks zu einer unterschiedlich starken Erhitzung des Werkstücks, so dass ein unregelmäßiges Härtebild entsteht.

Ein weiteres Problem liegt darin, dass für die im Werkstückhalter induzierten Wirbelströme und die damit einhergehende Erwärmung des Werkstückhalters unnötig Energie aufgebracht werden muss.

Der vorliegenden Erfindung liegt daher die Aufgabe zugrunde, eine Vorrichtung der eingangs genannten Art derart auszugestalten und weiterzubilden, dass eine sichere Fixierung des Werkstücks am Aufnahmebereich gewährleistet und dabei bei niedrigstem Energieaufwand eine gleichmäßige Erwärmung der Oberfläche des Werkstücks sichergestellt ist.

Erfindungsgemäß wird die voranstehende Aufgabe durch die Merkmale des Patentanspruchs 1 gelöst. Danach ist die in Rede stehende Vorrichtung zum Halten eines Werkstücks während einer induktiven Erwärmung dadurch gekennzeichnet, dass Aufnahmefinger zum kraftschlüssigen Halten des Werkstücks vorgesehen sind und dass die Aufnahmefinger aus Metall hergestellt sind.

Der Aufnahmebereich der Vorrichtung ist aus einem Material gefertigt, das eine geringe oder keine elektrische Leitfähigkeit aufweist. Hierbei kann es sich um ein beliebiges Material handeln, das den Anforderungen entsprechend hitzebeständig ist und eine ausreichende Standfestigkeit aufweist. Durch diese konstruktive Maßnahme wird das Induzieren von Wirbelströmen in der Vorrichtung auf verblüffend einfache Weise verhindert. Dies führt dazu, dass die Vorrichtung während der induktiven Erwärmung selbst nicht erhitzt wird. Somit kann ein beliebig kompliziert geformtes Werkstück gleichmäßig auf die erforderliche Härtetemperatur gebracht werden, so dass sich ein regelmäßiges Härtebild ergibt. Ein weiterer Vorteil liegt darin, dass durch die Verwendung eines nichtleitenden bzw. schlechtleitenden Materials im Vergleich zu aus dem Stand der Technik bekannten Vorrichtungen nur ein Bruchteil der Energie zur Erwärmung des Werkstück aufgewendet werden muss. An dieser Stelle sei ausdrücklich darauf hingewiesen, dass es bereits ausreichend ist, wenn lediglich der im direkten Kontakt mit dem Werkstück stehende Aufnahmebereich aus einem Material mit geringer oder keiner elektrischer Leitfähigkeit gefertigt ist. Des Weiteren ist denkbar, dass auch der Grundkörper aus einem entsprechenden Material gefertigt ist.

In vorteilhafter Weise kann der Aufnahmebereich aus einer Keramik gefertigt sein. Hierbei kann es sich beispielsweise um Aluminiumoxid handeln, wobei nochmals darauf hingewiesen sei, dass nicht nur der Aufnahmebereich sondern die gesamte Vorrichtung aus Keramik gefertigt sein kann.

In weiter vorteilhafter Weise kann zumindest der Aufnahmebereich aus Glas, beispielsweise aus Siliciumdioxid, gefertigt sein. Auch hier ist denkbar, dass sowohl der Grundkörper als auch der Aufnahmebereich aus Glas gefertigt sind.

Um das Werkstück kraftschlüssig im oder am Aufnahmebereich zu halten, sind in erfindungsgemäßer Weise Aufnahmefinger vorgesehen. Die Aufnahmefinger können beispielsweise kreisförmig um den Aufnahmebereich in einem Winkelabstand von ca. 90° vorgesehen sein. Die Aufnahmefinger sind weiter in erfindungsgemäßer Weise aus Metall hergestellt.

Zur Realisierung einer "Klick"-Aufnahme können die Aufnahmefinger gegen ein elastisches Mittel, beispielsweise gegen eine Feder, vorgespannt sein. Des Weiteren ist denkbar, dass die Aufnahmefinger auf Grund ihrer Eigenelastizität vorgespannt sind. Wesentlich ist hierbei lediglich, dass das Werkstück von den Aufnahmefingern kraftschlüssig im oder am Aufnahmebereich gehalten ist.

Zur Minimierung von Umrüstzeiten kann der Aufnahmebereich mit dem Grundkörper lösbar verbunden sein. Hierzu kann der Aufnahmebereich beispielsweise über eine Steckverbindung oder einer Schraubverbindung oder einer Bajonettverbindung mit dem Grundkörper verbunden sein. Sind am Aufnahmebereich des Weiteren Aufnahmefinger vorgesehen, so kann die Vorrichtung derart ausgestaltet sein, dass die Aufnahmefinger gemeinsam mit dem Aufnahmebereich lösbar am Grundkörper angebracht sind. Je nach Form des Werkstücks kann somit ein individuell auf das Werkstück abgestimmter Aufnahmebereich, ggf. mit entsprechenden Aufnahme-fingern, mit dem Grundkörper verbunden sein. Hierbei sei nochmals darauf hingewiesen, dass zumindest der Aufnahmebereich aus einem Material gefertigt ist, das eine geringe oder keine elektrische Leitfähigkeit aufweist. Des Weiteren ist denkbar, dass auch der Grundkörper aus einem Material gefertigt ist, das eine geringe oder keine elektrische Leitfähigkeit aufweist. Hierbei ist jedoch nicht zwingend erforderlich, dass der Aufnahmebereich und der Grundkörper aus dem gleichen Material gefertigt sind.

In vorteilhafter Weise kann der Aufnahmebereich ringartig oder kreisartig ausgeführt sein, so dass das Werkstück in einem beliebigen Winkel auf den Aufnahmebereich auflegbar ist. Des Weiteren ist denkbar, dass der Aufnahmebereich ringsegmentartig oder kreissegmentartig ausgeführt ist. Schließlich kann der Aufnahmebereich als Dreipunkt- oder Mehrpunkt-Auflage ausgeführt sein. Zu Realisierung einer Dreipunkt- oder Mehrpunkt-Auflage kann der Aufnahmebereich im konkreten erhabene Bereiche aufweisen, auf denen das Werkstück aufliegt bzw. anliegt.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einer perspektivischen Darstellung ein Ausführungsbeispiel einer erfindungsgemäßen Vorrichtung,
- Fig. 2: die erfindungsgemäße Vorrichtung aus Fig. 1 mit davon gehaltenem Werkstück,
- Fig. 3: in einer perspektivischen Darstellung den Grundkörper und den Aufnahmebereich der erfindungsgemäßen Vorrichtung aus Fig. 1,
- Fig. 4: eine Seitenansicht des Grundkörpers und des Aufnahmebereichs der erfindungsgemäßen Vorrichtung aus Fig. 1,
- Fig. 5: eine geschnittene Darstellung des Grundkörpers und des Aufnahmebereichs der erfindungsgemäßen Vorrichtung aus Fig. 1,
- Fig. 6: eine Draufsicht der erfindungsgemäßen Vorrichtung aus Fig. 1,
- Fig. 7: ein Ausführungsbeispiel eines erfindungsgemäßen Aufnahmefingers.

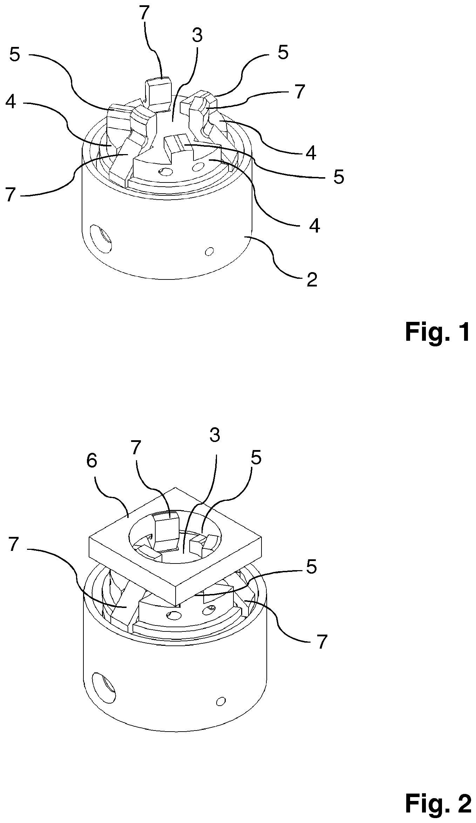

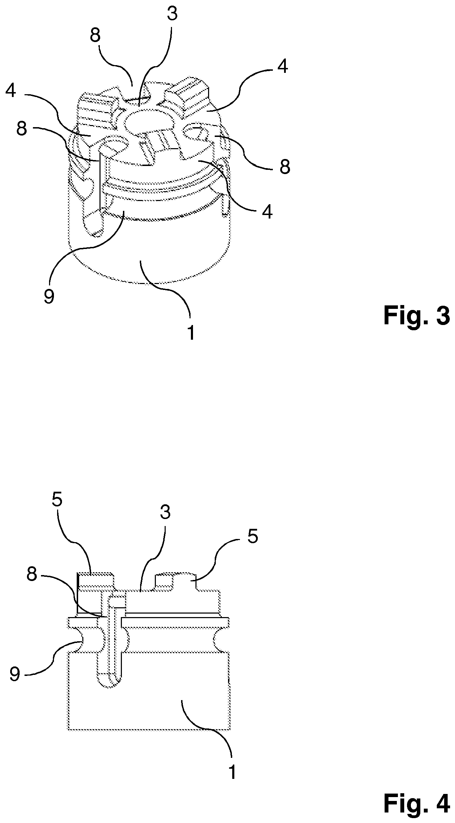

Fig. 1 zeigt in einer perspektivischen Darstellung ein Ausführungsbeispiel einer erfindungsgemäßen Vorrichtung. Die Vorrichtung umfasst einen in Fig. 3 dargestellten Grundkörper 1, der von einer Hülse 2 verdeckt ist. An den Grundkörper 1 schließt sich der Aufnahmebereich 3 an. Der Aufnahmebereich 3 ist kreissegmentartig ausgeführt, wobei auf den Kreissegmenten 4 jeweils ein erhabener Bereich 5 vorgesehen ist. Zumindest der Aufnahmebereich 3 der Vorrichtung ist dabei aus einem Material hergestellt, das eine geringe oder keine elektrische Leitfähigkeit aufweist. Die erhabenen Bereiche 5 dienen zur Auflage des in Fig. 2 gezeigten Werkstücks 6. Im hier dargestellten Ausführungsbeispiel ist der Aufnahmebereich 3 durch die erhabenen Bereiche 5 als Dreipunkt-Auflage ausgeführt. Zum Halten des Werkstücks 6, wird dieses von oben auf den Aufnahmebereich 3 aufgesteckt, bis es auf den erhabenen Bereichen 5 aufliegt. Um das Werkstück 6 während der induktiven Erwärmung form- und kraftschlüssig im Aufnahmebereich 3 zu halten, sind Aufnahmefinger 7 vorgesehen, die gegen eine Feder vorgespannt sind. Durch die Aufnahmefinger 7 ist eine "Klick"-Aufnahme realisiert.

Fig. 2 zeigt die erfindungsgemäße Vorrichtung aus Fig. 1, wobei im bzw. am Aufnahmebereich 3 das Werkstück 6 gehalten ist. Das Werkstück 6 ist zur Vereinfachung lediglich schematisch dargestellt, wobei das Werkstück 6 nicht zwangsweise rechteckig ausgeführt sein muss. Das Werkstück 6 kann beispielsweise auch die Form des Nockens der Nockenwelle eines Verbrennungsmotors aufweisen. Aus Fig. 2 geht deutlich hervor, dass das Werkstück 6 auf den erhabenen Bereichen 5 des Aufnahmebereichs 3 aufliegt und durch die Aufnahmefinger 7 form- und kraftschlüssig im bzw. am Aufnahmebereich 3 gehalten ist.

In Fig. 3 ist der Grundkörper 1 und der sich daran anschließende Aufnahmebereich 3 ohne die Hülse 2 und ohne die Aufnahmefinger 7 dargestellt. Fig. 3 zeigt, dass die Kreissegmente 4 durch Ausnehmungen 8 voneinander getrennt sind. Die Ausnehmungen 8 dienen zur Aufnahme der Aufnahmefinger 7. Wie bereits ausgeführt, sind die Aufnahmefinger 7 gegen eine Feder vorgespannt. Zur Aufnahme der Feder ist eine sich um die Vorrichtung herum erstreckende nutförmige Aussparung 9 vorgesehen.

Fig. 4 zeigt in einer Seitenansicht das Ausführungsbeispiel einer erfindungs-gemäßen Vorrichtung gemäß Fig. 1. Aus Fig. 4 geht deutlich hervor, dass der Aufnahmebereich 3 als integraler Bestandteil des Grundkörpers 1 ausgeführt ist, so dass sowohl der Grundkörper 1 als auch der Aufnahmebereich 3 aus einem Material hergestellt sind, das eine geringe oder keine elektrische Leitfähigkeit aufweist.

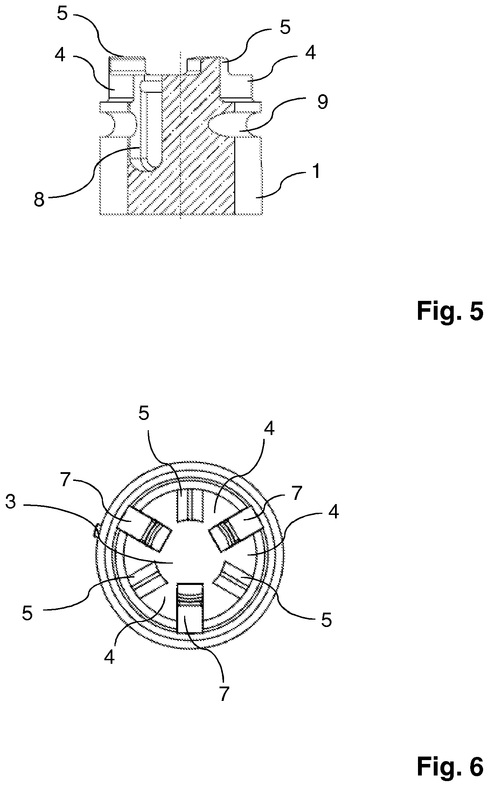

Fig. 5 zeigt in einer geschnittenen Ansicht das Ausführungsbeispiel einer erfindungsgemäßen Vorrichtung aus Fig. 1. Zur Vermeidung von Wiederholungen sei hierzu auf die voranstehenden Figurenbeschreibungen verwiesen.

In Fig. 6 ist das Ausführungsbeispiel einer erfindungsgemäßen Vorrichtung aus Fig. 1 in einer Draufsicht dargestellt. Hierbei ist deutlich zu sehen, dass der Aufnahmebereich 3 kreissegmentartig ausgeführt ist, wobei die einzelnen Kreissegmente 4 einen erhabenen Bereich 5 zur Aufnahme des Werkstücks aufweisen.

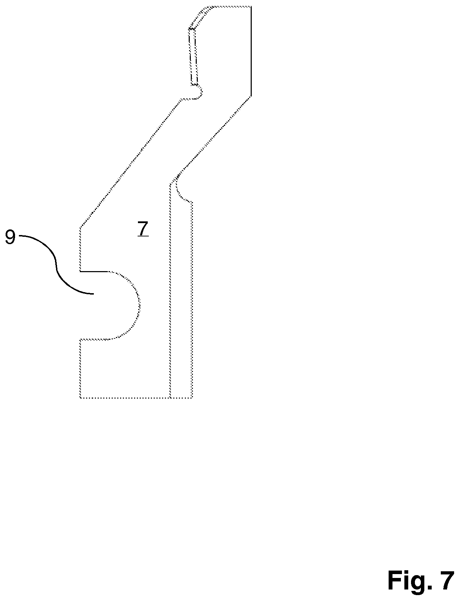

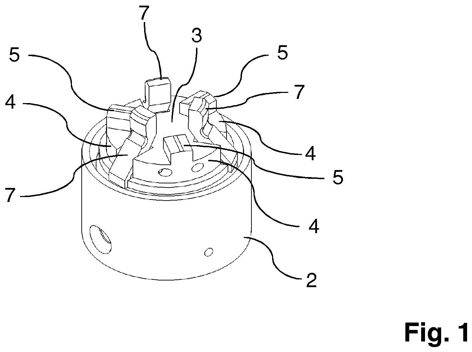

Fig. 7 zeigt ein Ausführungsbeispiel eines erfindungsgemäßen Aufnahmefingers 7. Der Aufnahmefinger 7 wird in der Ausnehmung 8 angebracht und weist eine Aussparung 9 zur Anlage einer Feder auf. Durch die Feder ist der Aufnahmefinger 7 derart vorgespannt, dass ein sich im Aufnahmebereich 3 befindliches Werkstück formschlüssig und kraftschlüssig gehalten ist.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Grundkörper
- 2: Hülse
- 3: Aufnahmebereich
- 4: Kreissegment
- 5: erhabener Bereich
- 6: Werkstück
- 7: Aufnahmefinger
- 8: Ausnehmung
- 9: Aussparung

## Patentansprüche

1. Vorrichtung zum Halten eines Werkstücks (6) während einer induktiven Erwärmung, mit einem Grundkörper (1) und einem sich an den Grundkörper (1) anschließenden Aufnahmebereich (3), wobei das Werkstück (6) formschlüssig und/oder kraftschlüssig im/am Aufnahmebereich (3) gehalten wird, wobei zumindest der Aufnahmebereich (3) aus einem Material gefertigt ist, das eine geringe oder keine elektrische Leitfähigkeit aufweist, **dadurch gekennzeichnet, dass** Aufnahmefinger (7) zum kraftschlüssigen Halten des Werkstücks (6) vorgesehen sind und dass die Aufnahmefinger (7) aus Metall hergestellt sind.

2. Vorrichtung nach Anspruch 1, **dadurch gekennzeichnet, dass** zumindest der Aufnahmebereich (3) aus Keramik, beispielsweise Aluminiumoxid, gefertigt ist.

3. Vorrichtung nach Anspruch 1, **dadurch gekennzeichnet, dass** zumindest der Aufnahmebereich (3) aus Glas, beispielsweise Siliciumdioxid, gefertigt ist.

4. Vorrichtung nach einem der Ansprüche 1 bis 3, **dadurch gekennzeichnet, dass** die Aufnahmefinger (7) gegen ein elastisches Mittel, vorzugsweise gegen eine Feder, vorgespannt sind.

5. Vorrichtung nach Anspruch 4, **dadurch gekennzeichnet, dass** die Aufnahmefinger (7) aufgrund ihrer Eigenelastizität vorgespannt sind.

6. Vorrichtung nach einem der Ansprüche 1 bis 5, **dadurch gekennzeichnet, dass** der Aufnahmebereich (3) mit dem Grundkörper (1) lösbar verbunden ist, beispielsweise über eine Steckverbindung oder eine Schraubverbindung oder eine Bajonettverbindung, so dass der Aufnahmebereich (3) individuell an das Werkstück (6) anpassbar ist.

7. Vorrichtung nach einem der Ansprüche 1 bis 6, **dadurch gekennzeichnet, dass** der Aufnahmebereich (3) ringartig oder kreisartig ausgeführt ist.

8. Vorrichtung nach einem der Ansprüche 1 bis 6, **dadurch gekennzeichnet, dass** der Aufnahmebereich (3) ringsegmentartig oder kreissegmentartig ausgeführt ist.

9. Vorrichtung nach einem der Ansprüche 1 bis 8, **dadurch gekennzeichnet, dass** der Aufnahmebereich (3) als Drei- oder Mehrpunkt-Auflage ausgeführt ist.

## Claims

1. Method for retaining a workpiece (6) during an inductive heating operation, having a base member (1) and a receiving region (3) which adjoins the base member (1), wherein the workpiece (6) is retained in a positive-locking and/or non-positive-locking manner in/on the receiving region (3), wherein at least the receiving region (3) is produced from a material which has a low level of or no electrical conductivity, **characterised in that** receiving fingers (7) are provided to retain the workpiece (6) in a non-positive-locking manner and **in that** the receiving fingers (7) are produced from metal.

2. Device according to claim 1, **characterised in that** at least the receiving region (3) is produced from ceramic material, for example, aluminium oxide.

3. Device according to claim 1, **characterised in that** at least the receiving region (3) is produced from glass, for example, silicon dioxide.

4. Device according to any one of claims 1 to 3, **characterised in that** the receiving fingers (7) are pretensioned with respect to a resilient means, preferably with respect to a spring.

5. Device according to claim 4, **characterised in that** the receiving fingers (7) are pretensioned as a result of their inherent resilience.

6. Device according to any one of claims 1 to 5, **characterised in that** the receiving region (3) is releasably connected to the base member (1), for example, by means of a plug type connection or a screw connection or a bayonet connection, so that the receiving region (3) can be adapted individually to the workpiece (6).

7. Device according to any one of claims 1 to 6, **characterised in that** the receiving region (3) is constructed in an annular or circular manner.

8. Device according to any one of claims 1 to 6, **characterised in that** the receiving region (3) is constructed in the manner of a ring segment or in the manner of a circle segment.

9. Device according to any one of claims 1 to 8, **characterised in that** the receiving region (3) is constructed as a three-point or multi-point support.

## Revendications

1. Dispositif de maintien d'une pièce (6) pendant un chauffage inductif,
avec un corps de base (1) et une zone de logement (3) prolongeant le corps de base (1), la pièce (6) étant maintenue par complémentarité de forme et/ou par friction dans/sur la zone de logement (3), au moins la zone de logement (3) étant constituée d'un matériau, qui présente une conductivité électrique faible ou nulle,
**caractérisé en ce que** des taquets de logement (7) sont prévus pour le maintien par friction de la pièce (6) et **en ce que** les taquets de logement (7) sont constitués de métal.

2. Dispositif selon la revendication 1, **caractérisé en ce qu'**au moins la zone de logement (3) est constituée de céramique, par exemple d'oxyde d'aluminium.

3. Dispositif selon la revendication 1, **caractérisé en ce qu'**au moins la zone de logement (3) est constituée de verre, par exemple de dioxyde de silicium.

4. Dispositif selon l'une des revendications 1 à 3, **caractérisé en ce que** les taquets de logement (7) sont précontraints contre un moyen élastique, de préférence contre un ressort.

5. Dispositif selon la revendication 4, **caractérisé en ce que** les taquets de logement (7) sont précontraints du fait de leur élasticité propre.

6. Dispositif selon l'une des revendications 1 à 5, **caractérisé en ce que** la zone de logement (3) est reliée de manière amovible avec le corps de base (1), par exemple par l'intermédiaire d'une liaison emboîtée ou d'une liaison vissée ou d'une liaison à baïonnette, de façon à ce que la zone de logement (3) puisse être adaptée individuellement à la pièce (6).

7. Dispositif selon l'une des revendications 1 à 6, **caractérisé en ce que** la zone de logement (3) est réalisée sous une forme annulaire ou circulaire.

8. Dispositif selon l'une des revendications 1 à 6, **caractérisé en ce que** la zone de logement (3) est réalisée sous la forme d'un segment annulaire ou d'un segment de cercle.

9. Dispositif selon l'une des revendications 1 à 8, **caractérisé en ce que** la zone de logement (3) est réalisée sous la forme d'un appui à trois points ou multi-points.
